# EUROPEAN PATENT APPLICATION

(11) **EP 4 761 482 A1**
(43) Date of publication of application: **17.06.2026**
(21) Application number: 23962699.7
(22) Date of filing: 28.12.2023
(51) Int. Cl.: H05K 7/20, H05K 5/02

(54) **ELECTRONIC DEVICE**

(71) Applicant: Honor Device Co., Ltd., Shenzhen, Guangdong 518040 (CN)
(72) Inventor: SONG, Bennan, Shenzhen, Guangdong 518040 (CN); YAN, Bin, Shenzhen, Guangdong 518040 (CN); XU, Zhengxuan, Shenzhen, Guangdong 518040 (CN); ZHOU, Guotong, Shenzhen, Guangdong 518040 (CN); LI, Tuo, Shenzhen, Guangdong 518040 (CN)
(74) Representative: Isarpatent
(86) International application number: PCT/CN2023/142875
(87) International publication number: WO 2025/138018

(57) **Abstract**

This application provides an electronic device. The electronic device includes a middle frame, a vapor chamber, and a battery. The middle frame is provided with a mounting hole. The mounting hole runs through the middle frame in a thickness direction of the middle frame. The vapor chamber is disposed at the middle frame, and covers at least part of the mounting hole. The battery is at least partially disposed in the mounting hole, and is disposed on a surface of the vapor chamber facing the battery. In the electronic device provided in this application, the vapor chamber is used as a middle plate of a battery compartment to bear the battery. This can reduce space occupation of the middle plate of the battery compartment inside the electronic device. The vapor chamber is provided with a thickness space originally for the middle plate of the battery compartment, equivalent to reducing space occupation of the vapor chamber inside the electronic device, thereby facilitating a light and thin design of the electronic device.

## Description

### TECHNICAL FIELD

This application relates to the field of electronic device technologies, and in particular, to an electronic device.

### BACKGROUND

With continuous development of science and technology, electronic devices such as mobile phones are widely used in people's daily life and work, and have become indispensable daily necessities for people. Currently, heat dissipation components such as a vapor chamber and a heat dissipation layer are usually used for heat dissipation of an electronic device. The heat dissipation components such as a vapor chamber and a heat dissipation layer occupy a large internal space of the electronic device, which is not conductive to a light and thin design of the electronic device.

### SUMMARY

This application provides an electronic device, to reduce space occupation of a heat dissipation component inside the electronic device, so as to facilitate a light and thin design of the electronic device.

The electronic device includes a middle frame, a vapor chamber, and a battery. The middle frame is provided with a mounting hole, and the mounting hole runs through the middle frame in a thickness direction of the middle frame. The vapor chamber is disposed at the middle frame, and covers at least part of the mounting hole. The battery is at least partially disposed in the mounting hole, and is disposed on a surface of the vapor chamber facing the battery.

In the electronic device provided in this application, the vapor chamber is used as a middle plate of a battery compartment to bear the battery. This can reduce space occupation of the middle plate of the battery compartment inside the electronic device. The vapor chamber is provided with a thickness space originally for the middle plate of the battery compartment, equivalent to reducing space occupation of the vapor chamber inside the electronic device, thereby facilitating the light and thin design of the electronic device. In addition, reduction of the middle plate of the battery compartment can save preparation costs of the middle plate of the battery compartment, and heat generated during operation of the battery does not need to be transferred to the vapor chamber through the middle plate of the battery compartment, so that the heat generated during operation of the battery can be quickly transferred to the vapor chamber to achieve heat spreading, thereby achieving rapid heat dissipation for the battery. This helps prolong a service life of the battery.

It should be noted that the vapor chamber being disposed at the middle frame means that the vapor chamber may be disposed on a side of the middle frame, or the vapor chamber may be at least partially embedded in the middle frame, and in this case, the vapor chamber may be at least partially located in the mounting hole.

It should be noted that the battery being disposed on the surface of the vapor chamber facing the battery includes two cases: "direct disposition" and "indirect disposition". The "direct disposition" means that the battery is directly disposed on the surface of the vapor chamber facing the battery, to be specific, there is no other intermediate layer structure between the battery and the vapor chamber. The "indirect disposition" means that the battery is disposed on the surface of the vapor chamber facing the battery through an intermediate layer structure such as an adhesive layer or a buffer layer, that is, there is an intermediate layer structure such as an adhesive layer or a buffer layer between the battery and the vapor chamber.

In an implementation, the middle frame includes a middle plate and a border frame. The middle plate is provided with a mounting hole, the border frame is connected to the middle plate and is disposed around the middle plate, and the vapor chamber is disposed at the border frame.

In the electronic device provided in this application, the vapor chamber extends to the border frame of the middle frame, and a structure such as a step assembly with the vapor chamber does not need to be designed on the middle plate, so that an assembly position between the vapor chamber and the middle plate can be prevented from becoming a bottleneck of reducing a thickness of the electronic device, thereby facilitating the light and thin design of the electronic device.

In an implementation, the middle plate is further provided with an avoidance hole. The avoidance hole runs through the middle plate in a thickness direction of the middle plate and is spaced apart from the mounting hole.

The vapor chamber further covers at least part of the avoidance hole.

The electronic device further includes a circuit board and a heat generation component. The circuit board is disposed on a side of the middle plate facing away from the vapor chamber, and the heat generation component is disposed on a side of the circuit board facing the vapor chamber, runs through the avoidance hole, and is in contact with the vapor chamber. The heat generated during operation of the heat generation component can be directly transferred to the vapor chamber to achieve heat spreading, thereby achieving rapid heat dissipation for the heat generation component. This helps prolong a service life of the heat generation component.

In an implementation, the electronic device further includes a power distribution network. The power distribution network is disposed on a side of the circuit board facing away from the vapor chamber and is electrically connected to the battery.

In an implementation, the vapor chamber includes a first heat spreading part, a second heat spreading part, and a third heat spreading part. The first heat spreading part covers at least part of the mounting hole, and the first heat spreading part has a first heat spreading surface facing the battery. In a length direction of the vapor chamber, the second heat spreading part is disposed on a side of the first heat spreading part and covers at least part of the avoidance hole. The second heat spreading part has a second heat spreading surface facing the battery, and the second heat spreading surface is located on a side of the first heat spreading surface facing away from the battery. The third heat spreading part is connected between the first heat spreading part and the second heat spreading part.

The battery is disposed on the first heat spreading surface, and the heat generation component is in contact with the second heat spreading surface. In this case, the heat generation component and the first heat spreading part at least partially overlap in a thickness direction of the electronic device.

In the electronic device provided in this application, the vapor chamber is designed to be stepped, and the first heat spreading part at least partially reuses a thickness space of the heat generation component, so that space occupation of the vapor chamber inside the electronic device can be reduced, to match a demand for thinning the electronic device, thereby facilitating the light and thin design of the electronic device.

In an implementation, the electronic device further includes a display panel and a connection circuit board. The display panel is disposed on a side of the vapor chamber facing away from the middle plate, the connection circuit board is electrically connected to the display panel and the circuit board, the connection circuit board includes a first portion and a second portion, the first portion is disposed between the display panel and the first heat spreading part, the first portion has a first surface facing away from the display panel, the second portion is connected to a side of the first portion and is disposed between the display panel and the second heat spreading part, the second portion has a second surface facing away from the display panel, and the second surface is located on a side of the first surface facing the display panel.

The first heat spreading part has a third heat spreading surface disposed opposite to the first heat spreading surface, the second heat spreading part has a fourth heat spreading surface disposed opposite to the first heat spreading surface, and the fourth heat spreading surface is located on a side of the third heat spreading surface facing the second portion.

In the electronic device provided in this application, the connection circuit board of a display screen is partially thinned, so that a structure of the connection circuit board matches with the stepped design of the vapor chamber, and a large thickness space on a side of the second portion facing away from the display panel may be reserved for arrangement of an internal component of the electronic device, thereby facilitating the light and thin design of the electronic device.

In an implementation, the electronic device further includes a display driver. The display driver is disposed on the display panel or the connection circuit board and electrically connected to the connection circuit board, and the display driver and the vapor chamber at least partially overlap in the thickness direction of the electronic device. In other words, the vapor chamber may at least partially reuse a thickness space for the display driver, so that space occupation of the vapor chamber inside the electronic device can be reduced, to match the demand for thinning the electronic device, thereby facilitating the light and thin design of the electronic device.

In an implementation, the vapor chamber is further provided with a groove, where an opening of the groove is located on a surface of the vapor chamber facing the display driver, and a projection of the display driver on the vapor chamber is located in the groove, so as to further increase the thickness space for the display driver that is reused by the uniform board and reduce space occupation of the vapor chamber inside the electronic device, to match the demand for thinning the electronic device, thereby facilitating the light and thin design of the electronic device.

In an implementation, the vapor chamber is provided with a liquid injection port. The liquid injection port is staggered with both the battery and the circuit board in the thickness direction of the electronic device. In other words, the liquid injection port can avoid a region in which the vapor chamber is staggered with the battery and the circuit board. This helps reduce space occupation of the vapor chamber inside the electronic device, thereby facilitating the light and thin design of the electronic device.

In an implementation, the electronic device further includes a sealing adhesive layer. The sealing adhesive layer is connected between the vapor chamber and the middle frame and seals the liquid injection port, to ensure a waterproof property of the electronic device.

In an implementation, the vapor chamber includes a first cover plate, a second cover plate, and an intermediate connecting layer. The first cover plate is disposed at the border frame and at least partially covers the mounting hole. The second cover plate is disposed on a side of the first cover plate facing away from the border frame and is spaced apart from the first cover plate. The intermediate connecting layer is connected between the first cover plate and the second cover plate, and defines a heat spreading cavity with the first cover plate and the second cover plate.

The battery is disposed on a surface of the first cover plate facing away from the second cover plate.

In the electronic device provided in this application, the first cover plate of the vapor chamber is used as the middle plate of the battery compartment to bear the battery. This can reduce space occupation of the middle plate of the battery compartment inside the electronic device. The vapor chamber may occupy a space for the middle plate of the battery compartment, equivalent to reducing space occupation of the vapor chamber inside the electronic device, thereby facilitating the light and thin design of the electronic device.

In an implementation, the first cover plate includes a skirt. The skirt is disposed around a heat dissipation cavity and is disposed at the border frame.

The electronic device further includes a first connecting layer. The first connecting layer is connected between the skirt and the border frame, to implement assembly between the first cover plate and the border frame, and further implement assembly between the vapor chamber and the middle frame.

In an implementation, a width of the skirt ranges from 1.5 mm to 2.5 mm, to ensure that the skirt has a sufficient assembly width for assembly with the border frame and ensure assembly stability between the first cover plate and the border frame.

In an implementation, the skirt includes a first sub-skirt and a second sub-skirt. A distance between the first sub-skirt and the heat dissipation cavity is less than a distance between the second sub-skirt and the heat dissipation cavity. In other words, the first sub-skirt may belong to a core heat dissipation region of the vapor chamber, and the second sub-skirt may belong to a cold region of the vapor chamber. A width of the first sub-skirt is less than a width of the second sub-skirt, so that it can be ensured that the core heat dissipation region of the vapor chamber has a larger heat dissipation area, to improve a heat spreading capability of the vapor chamber, and another region of the vapor chamber also has a larger assembly area with the border frame. This helps improve assembly stability between the vapor chamber and the border frame.

In an implementation, the border frame is provided with a clamping slot. The first cover plate includes a buckle. The buckle is disposed in the clamping slot and clamps mutually with the clamping slot, to implement assembly between the first cover plate and the border frame, and further implement assembly between the vapor chamber and the middle frame.

In an implementation, the border frame is provided with a first fixing hole.

The first cover plate is provided with a second fixing hole. The second fixing hole runs through the first cover plate in a thickness direction of the first cover plate and is in communication with the first fixing hole.

The electronic device further includes a fastener. The fastener runs through the first fixing hole and the second fixing hole, and is connected to the first cover plate and the border frame, to implement assembly between the first cover plate and the border frame, and further implement assembly between the vapor chamber and the middle frame.

In the electronic device provided in this application, assembly between the first cover plate and the border frame is implemented by using the first connecting layer, cooperation of the buckle and the clamping slot, and the fastener. This can improve consistency of movement, electrical connection, and sealing of the vapor chamber and the middle frame, match a stiffness requirement of the electronic device, and meet a grounding requirement of electrical connection and a waterproof requirement of the electronic device.

In an implementation, the electronic device further includes a heat dissipation layer. The heat dissipation layer is disposed on a side of the vapor chamber facing away from the battery, and the heat dissipation layer may transfer heat of the vapor chamber to an external environment, to implement heat dissipation of components such as the battery and the heat generation component.

In an implementation, the electronic device includes a first main body, a second main body, and a foldable mechanism. The first main body includes the middle frame, the vapor chamber, and the battery, and the foldable mechanism is connected between the first main body and the second main body. In other words, the electronic device is a foldable terminal.

In the electronic device provided in this application, the vapor chamber is used as the middle plate of the battery compartment to bear the battery. This can reduce space occupation of the middle plate of the battery compartment inside the electronic device. The vapor chamber may occupy a space for the middle plate of the battery compartment, equivalent to reducing space occupation of the vapor chamber inside the electronic device, thereby facilitating the light and thin design of the electronic device. In addition, reduction of the middle plate of the battery compartment can save preparation costs of the middle plate of the battery compartment, and heat generated during operation of the battery does not need to be transferred to the vapor chamber through the middle plate of the battery compartment, so that the heat generated during operation of the battery can be quickly transferred to the vapor chamber to achieve heat spreading, thereby achieving rapid heat dissipation for the battery. This helps prolong a service life of the battery.

### BRIEF DESCRIPTION OF DRAWINGS

To describe technical solutions in embodiments of this application more clearly, the following describes accompanying drawings required in embodiments of this application.
FIG. 1 is a schematic diagram of a structure of an electronic device in a state according to an embodiment of this application;
FIG. 2 is a schematic diagram of a structure of the electronic device shown in FIG. 1 in a second state;
FIG. 3 is a schematic diagram of a structure of the electronic device shown in FIG. 1 in a third state;
FIG. 4 is a schematic diagram of a partial structure of the electronic device shown in FIG. 3 cut along I-I in a first embodiment;
FIG. 5A is a schematic diagram of a partial structure of the electronic device shown in FIG. 3 cut along II-II;
FIG. 5B is a simplified schematic diagram of a structure of the electronic device shown in FIG. 5A;
FIG. 6 is a schematic diagram of a partial structure of a first main body of the electronic device shown in FIG. 3 in a first embodiment;
FIG. 7 is a schematic exploded structural diagram of the first main body shown in FIG. 6;
FIG. 8 is a schematic exploded structural diagram of a vapor chamber of the first main body shown in FIG. 7;
FIG. 9 is a schematic cross-sectional structural view of the vapor chamber of the first main body shown in FIG. 7;
FIG. 10 is a schematic diagram of a partial structure of the first main body shown in FIG. 6 cut along III-III;
FIG. 11 is a schematic diagram of a partial structure of a first cover plate of the vapor chamber shown in FIG. 8;
FIG. 12 is a schematic diagram of a partial structure of the first main body shown in FIG. 6 cut along IV-IV;
FIG. 13 is a schematic diagram of a partial structure of the first main body shown in FIG. 6;
FIG. 14 is a schematic diagram of a partial structure of the first main body shown in FIG. 6 cut along V-V;
FIG. 15 is a schematic diagram of a partial structure of the electronic device shown in FIG. 3 cut along I-I in a second embodiment; and
FIG. 16 is a schematic diagram of a partial structure of a vapor chamber of a first main body of the electronic device shown in FIG. 3 in a second embodiment.

### DESCRIPTION OF EMBODIMENTS

The following clearly and completely describes technical solutions in embodiments of this application with reference to the accompanying drawings in embodiments of this application.

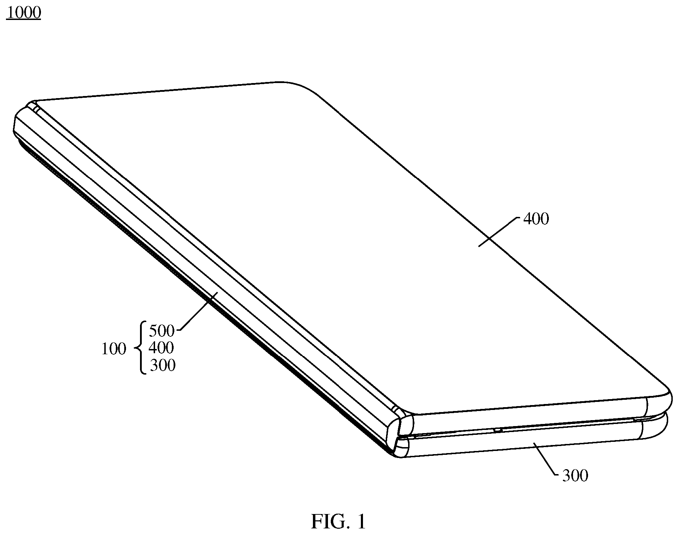

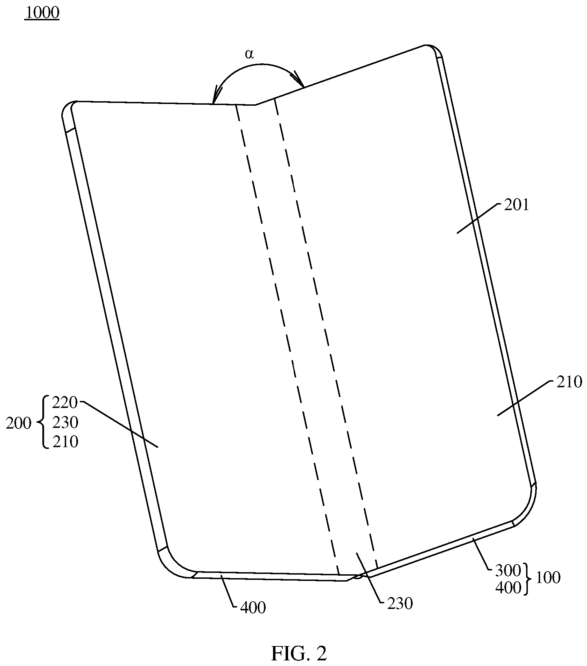

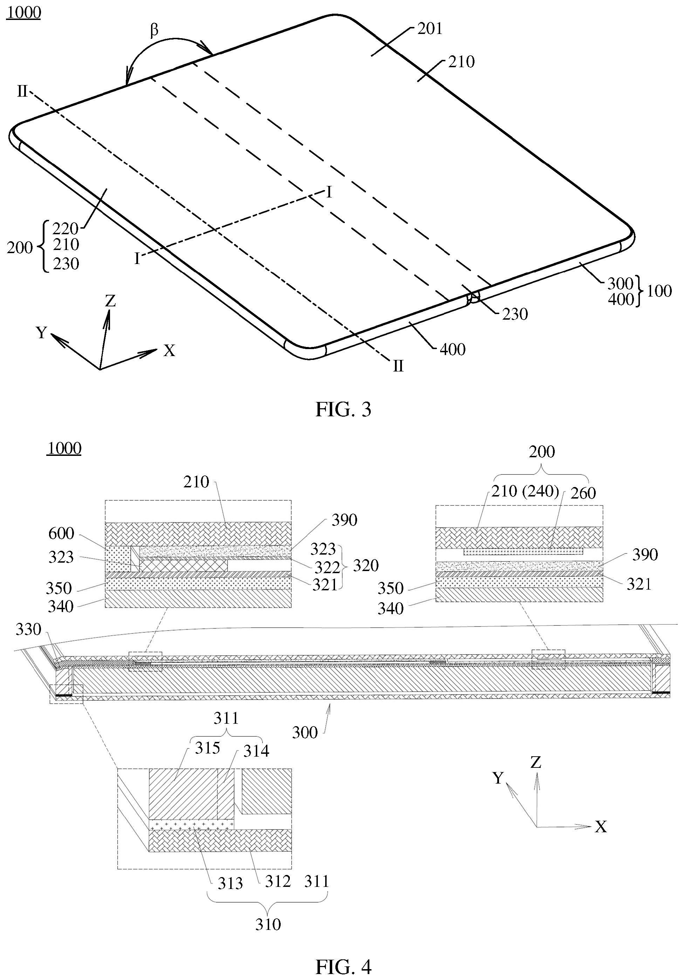

Refer to FIG. 1 and FIG. 2. FIG. 1 is a schematic diagram of a structure of an electronic device 1000 in a state according to an embodiment of this application, FIG. 2 is a schematic diagram a structure of the electronic device 1000 shown in FIG. 1 in a second state, and FIG. 3 is a schematic diagram of a structure of the electronic device 1000 shown in FIG. 1 in a third state.

The electronic device 1000 may be an electronic product, for example, a mobile phone, a tablet computer, a personal computer, a multimedia player, an e-book reader, a notebook computer, a vehicle-mounted device, or a wearable device. In this embodiment, the electronic device 1000 may be a foldable terminal. To be specific, the electronic device 1000 is a terminal that may be switched between a folded state and an unfolded state.

For ease of description, a length direction of the electronic device 1000 shown in FIG. 3 is defined as an X-axis direction, a length direction of the electronic device 1000 is defined as a Y-axis direction, a thickness direction of the electronic device 1000 is defined as a Z-axis direction. The X-axis direction, the Y-axis direction, and the Z-axis direction are perpendicular to each other. For example, an extension direction of a rotation axis of the electronic device 1000 is parallel to the Y-axis direction. In other words, the electronic device 1000 can be oppositely unfolded or oppositely folded around the Y-axis direction.

It should be noted that qualifiers such as parallel and perpendicular for a relative position relationship in embodiments of this application are all for a current process level, and are not absolutely strict definitions in the mathematical sense. A slight deviation is allowed, and approximately parallel and approximately perpendicular are acceptable. For example, that A is parallel to B means that A is parallel or approximately parallel to B, and an angle between A and B may range from 0 degrees to 10 degrees. For example, that A is perpendicular to B means that A is perpendicular or approximately perpendicular to B, and an angle between A and B may range from 80 degrees to 100 degrees.

The electronic device 1000 shown in FIG. 1 is in the folded state. A dimension of the electronic device 1000 in the X-axis direction is small, and the electronic device 1000 is easy to carry. The electronic device 1000 shown in both FIG. 2 and FIG. 3 is in the unfolded state. For example, an unfolding angle α of the electronic device 1000 shown in FIG. 2 may be 90 degrees. An unfolding angle β of the electronic device 1000 shown in FIG. 3 may be 180 degrees. In other words, the electronic device 1000 shown in FIG. 3 is in a flattened state. In this case, a dimension of the electronic device 1000 in the X-axis direction is large, and the electronic device 1000 has a large display area.

It should be noted that each angle exemplified in this embodiment of this application is allowed to have a slight deviation. For example, that the unfolding angle α of the electronic device 1000 shown in FIG. 2 may be 90 degrees means that α may be 90 degrees or approximately 90 degrees, for example, 80 degrees, 85 degrees, 95 degrees, or 100 degrees. Similarly, that the unfolding angle β of the electronic device 1000 shown in FIG. 3 may be 180 degrees means that β may be 180 degrees or approximately 180 degrees, for example, 170 degrees, 175 degrees, 185 degrees, or 190 degrees. Angles exemplified in the following may be understood in a same way.

It should be understood that the electronic device 1000 shown in this embodiment of this application is a terminal that may be folded once. In some other embodiments, the electronic device 1000 may alternatively be a terminal that may be folded for a plurality of times (twice or more). In this case, the electronic device 1000 may include a plurality of parts. Two adjacent parts may be oppositely folded close to each other until the electronic device 1000 is in the folded state, and the two adjacent parts may be oppositely unfolded far away from each other until the electronic device 1000 is in the unfolded state.

The electronic device 1000 may include a foldable apparatus 100 and a display screen 200, and the display screen 200 is mounted on the foldable apparatus 100. The display screen 200 may include a display surface (not marked) facing away from the foldable apparatus 100, and the display surface is configured to display information, for example, a text, an image, or a video. In this embodiment, the display screen 200 may include a first display part 210, a second display part 220, and a foldable part 230. The foldable part 230 is connected between the first display part 210 and the second display part 220. The foldable part 230 may be bent around the Y-axis direction.

It should be noted that, dividing lines (dashed lines shown in FIG. 2 and FIG. 3) between the first display part 210, the second display part 220, and the foldable part 230 are exemplarily shown in FIG. 2 and FIG. 3, and do not indicate or imply that the first display part 210, the second display part 220, and the foldable part 230 need to be defined by the dashed lines shown in the figures, and therefore cannot be understood as a limitation to this application.

As shown in FIG. 1, when the electronic device 1000 is in the folded state, both the foldable apparatus 100 and the display screen 200 are in the folded state, the first display part 210 and the second display part 220 are disposed opposite to each other, and the foldable part 230 is bent. In this case, an exposed area of the display screen 200 is small. This can greatly reduce a probability that the display screen 200 is damaged and effectively protect the display screen 200.

As shown in FIG. 2, when the electronic device 1000 is in an unfolded state, both the foldable apparatus 100 and the display screen 200 are in the unfolded state, the first display part 210 and the second display part 220 are oppositely unfolded, and the foldable part 230 is bent. In this case, an angle between the first display part 210 and the second display part 220 may be α.

As shown in FIG. 3, when the electronic device 1000 is in the flattened state, both the foldable apparatus 100 and the display screen 200 are in the flattened state, the first display part 210 and the second display part 220 are flattened oppositely unfolded, and the foldable part 230 is flattened without being bent. In this case, angles between the first display part 210, the second display part 220, and the foldable part 230 may be all β, and the display screen 200 has a large display region, to implement large-screen display of the electronic device 1000, thereby improving user experience.

It should be understood that the electronic device 1000 in this embodiment of this application is folded inward, and the display screen 200 is located on an inner side of the foldable apparatus 100 when the electronic device 1000 is in the folded state. In some other embodiments, the electronic device 1000 may alternatively be folded outward, and the display screen 200 is located on an outer side of the foldable apparatus 100 when the electronic device 1000 is in the folded state.

The foldable apparatus 100 may include a first main body 300, a second main body 400, and a foldable mechanism 500, and the foldable mechanism 500 may be connected between the first main body 300 and the second main body 400, to implement rotatable connection between the first main body 300 and the second main body 400. Specifically, the first main body 300 may bear the first display part 210, and the second main body 400 may bear the second display part 220. In other words, the first display part 210 is mounted on the first main body 300, and the second display part 220 is mounted on the second main body 400. The foldable mechanism 500 and the foldable part 230 are disposed opposite to each other.

The first main body 300 and the second main body 400 may oppositely rotate through the foldable mechanism 500, so that the foldable apparatus 100 is switched between the folded state and the unfolded state. Specifically, the first main body 300 and the second main body 400 may rotate relatively to be disposed opposite to each other, so that the foldable apparatus 100 is in the folded state, as shown in FIG. 1. In this case, the foldable mechanism 500 is in the folded state. Alternatively, the first main body 300 and the second main body 400 may oppositely rotate to be oppositely unfolded, so that the foldable apparatus 100 is in a half-unfolded state, as shown in FIG. 2. In this case, the foldable mechanism 500 is in the half-unfolded state. For example, an angle between the first main body 300 and the second main body 400 may be α. Alternatively, the first main body 300 and the second main body 400 may oppositely rotate to be oppositely flattened, so that the electronic device 1000 is in the flattened state, as shown in FIG. 3. For example, an angle between the first main body 300 and the second main body 400 may be β. In this case, the foldable mechanism 500 is in the flattened state.

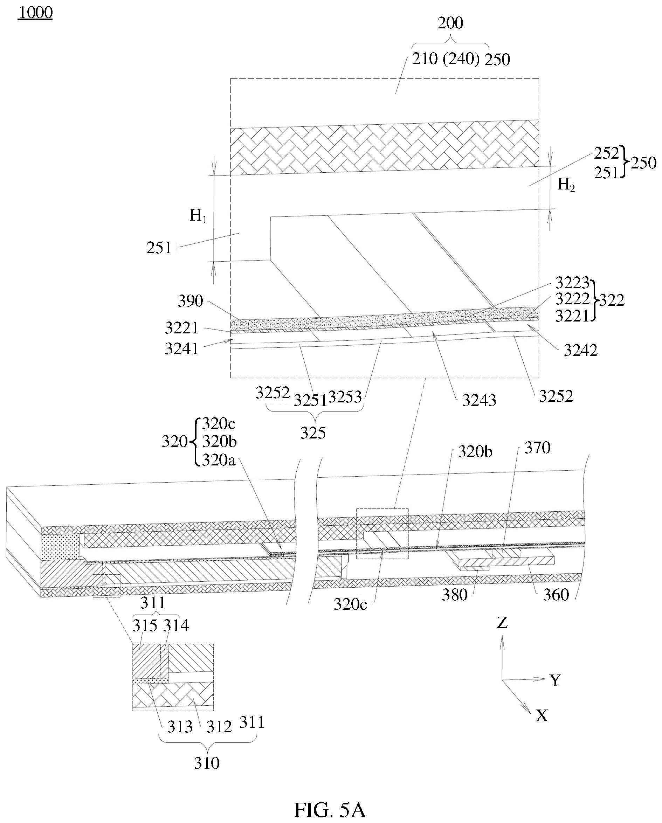

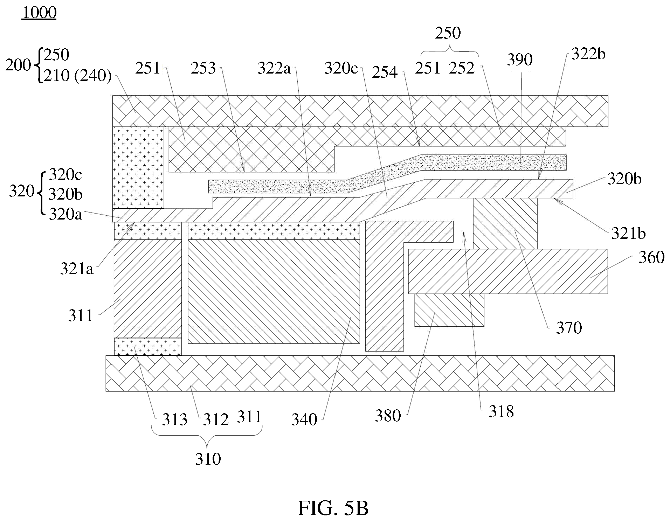

Refer to FIG. 4, FIG. 5A, and FIG. 5B. FIG. 4 is a schematic diagram of a partial structure of the electronic device 1000 shown in FIG. 3 cut along I-I in a first embodiment, FIG. 5A is a schematic diagram of a partial structure of the electronic device 1000 shown in FIG. 3 cut along II-II, and FIG. 5B is a simplified schematic diagram of a structure of the electronic device 1000 shown in FIG. 5A. "Cut along I-I" means being cut along a plane on which a line I-I is located. Similar descriptions in this specification may be understood in a same way.

The display screen 200 may include a display panel 240, a connection circuit board 250, and a display driver 260. The display panel 240 may include the first display part 210, the second display part 220, and the foldable part 230. The connection circuit board 250 may be electrically connected to the display panel 240, and may be folded relative to the display panel 240. For example, the connection circuit board 250 may be a flexible printed circuit (flexible printed circuit, FPC), or the connection circuit board 250 may be a rigid-flexible board.

The connection circuit board 250 may include a first portion 251 and a second portion 252. Both the first portion 251 and the second portion 252 may be disposed on a side of the first display part 210 facing the first main body 300. The first portion 251 has a first surface 253 facing away from the first display part 210. The second portion 252 is connected to a side of the first portion 251. For example, the second portion 252 may be connected to a side of the first portion 251 in a Y-axis positive direction. The second portion 252 has a second surface 254 facing away from the first display part 210. The second surface 254 may be located on a side of the first surface 253 facing the first display part 210.

For example, a surface of the second portion 252 facing the first display part 210 may be flush with located on a surface of the first portion 251 facing the first display part 210. In this case, a thickness H₁ of the first portion 251 may be greater than a thickness H₂ of the second portion 252. In some other embodiments, the surface of the second portion 252 facing the first display part 210 may not be flush with the surface of the first portion 251 facing the first display part 210.

In this embodiment, the connection circuit board 250 is partially thinned, and the connection circuit board 250 is designed to be of an unequal thickness structure. The thickness of the second portion 252 is less than the thickness of the first portion 251, so that space occupation of the connection circuit board 250 inside the electronic device 1000 can be reduced, and a sufficient thickness space can be reserved on a side of the second portion 252 facing away from the first display part 210 to arrange internal components of the electronic device 1000, thereby facilitating a light and thin design of the electronic device 1000.

The display driver 260 may be disposed on the first display part 210. Specifically, the display driver 260 may be disposed on the side of the first display part 210 facing the first main body 300, and may be electrically connected to the connection circuit board 250. The display driver 260 may be a display drive chip (display drive IC, DDIC). In some other embodiments, the display driver 260 may alternatively be disposed on the connection circuit board 250. A position of the display driver 260 is not specifically limited in this application.

The first main body 300 may bear the first display part 210. In this embodiment, the electronic device 1000 may further include a second connecting layer 600. The second connecting layer 600 may be disposed between the first display part 210 and the first main body 300, and may be connected between the first display part 210 and the first main body 300, to implement assembly between the first display part 210 and the first main body 300. The second connecting layer 600 may be an adhesive layer, for example, a back adhesive or a foam adhesive.

The first main body 300 may include a housing 310, a vapor chamber 320, a first connecting layer 330, a battery 340, a third connecting layer 350, a circuit board 360, a heat generation component 370, a power distribution network (power distribution network, PDN) 380, and a heat dissipation layer 390. The housing 310 may bear the first display part 210. All the vapor chamber 320, the battery 340, the third connecting layer 350, the circuit board 360, the heat generation component 370, the power distribution network 380, and the heat dissipation layer 390 may be disposed on the housing 310.

The vapor chamber 320 may be disposed on a side of the housing 310 facing the first display part 210, may be located between the housing 310 and the first display part 210, and may be spaced apart from the first display part 210. The first connecting layer 330 may be disposed between the housing 310 and the vapor chamber 320, and may be connected between the housing 310 and the vapor chamber 320, to implement assembly between the housing 310 and the vapor chamber 320. The first connecting layer 330 is provided with a first clearance 331. The first clearance 331 is located in the middle of the first connecting layer 330, and runs through the first connecting layer 330 in a thickness direction of the first connecting layer 330. In other words, the first connecting layer 330 is ring-shaped. The battery 340 may be disposed on a side of the housing 310 facing away from the first display part 210, may be located at the bottom of the first main body 300, and may be disposed on a surface of the vapor chamber 320 facing the battery 340. The third connecting layer 350 may be disposed between the vapor chamber 320 and the battery 340, and may be connected between the vapor chamber 320 and the battery 340, to implement assembly between the vapor chamber 320 and the battery 340. The circuit board 360 may be disposed on the side of the housing 310 facing away from the first display part 210, may be located at the top of the first main body 300, and may be electrically connected to the battery 340 and the connection circuit board 250. The circuit board 360 may be a mainboard (mainboard) of the electronic device 1000. The heat generation component 370 may be disposed on a side of the circuit board 360 facing the first display part 210, may be electrically connected to the circuit board 360, and may be in contact with the vapor chamber 320. The heat generation component 370 may be a central processing unit (central processing unit, CPU) of the electronic device 1000. For example, the heat generation component 370 may be a system on chip (system on chip, SoC). The power distribution network 380 may be disposed on a side of the circuit board 360 facing away from the first display part 210, and may be electrically connected to the circuit board 360, to implement electrical connection with the battery 340 through the circuit board 360. The heat dissipation layer 390 may be disposed on a side of the vapor chamber 320 facing the first display part 210, may be located between the vapor chamber 320 and the first display part 210, and may be spaced apart from the first display part 210.

It should be noted that orientation terms such as "top" and "bottom" in this application are described with reference to orientations shown in FIG. 3. An orientation toward the Y-axis positive direction is "top", and an orientation toward a Y-axis negative direction is "bottom". This does not indicate or imply that the apparatus or element needs to have a specific orientation or be constructed and operated in a specific orientation, and therefore should not be understood as a limitation on this application.

In some other embodiments, the electronic device 1000 may alternatively be an unfoldable terminal. For example, the electronic device 1000 may be a bar phone. In this case, the electronic device 1000 may include a main body and a display screen. The display screen may be disposed on the main body, the main body may include a housing, a circuit board, a processor, a battery, a power distribution network, a vapor chamber, and a heat dissipation layer, and all the circuit board, the processor, the battery, the power distribution network, the vapor chamber, and the heat dissipation layer may be disposed on the housing. For a basic structure of the main body, a basic structure of the display screen, and a fitting relationship between the main body and the display screen, refer to related designs of the first main body 300 and the first display part 210 in this embodiment, and details are not described below.

Currently, heat dissipation components such as a vapor chamber and a heat dissipation layer are usually used for heat dissipation of electronic devices such as a foldable terminal and an unfoldable terminal. However, the heat dissipation components such as a vapor chamber and a heat dissipation layer occupy a large internal space of the electronic device, which is not conductive to the light and thin design of the electronic device. Particularly, because the foldable terminal further has a folded state, the foldable terminal usually requires higher space stacking utilization, and the existence of the vapor chamber and the heat dissipation layer is not conductive to lightening and thinning of the foldable terminal.

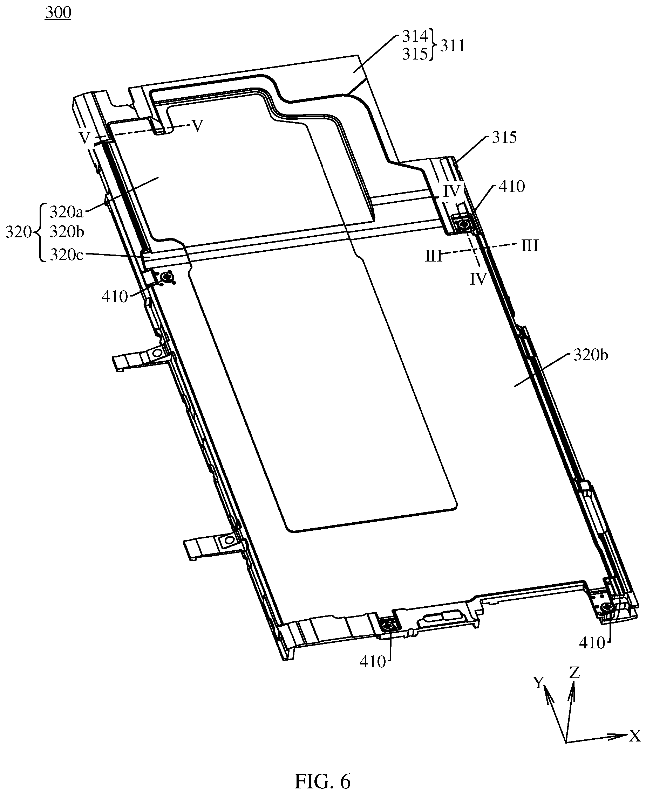

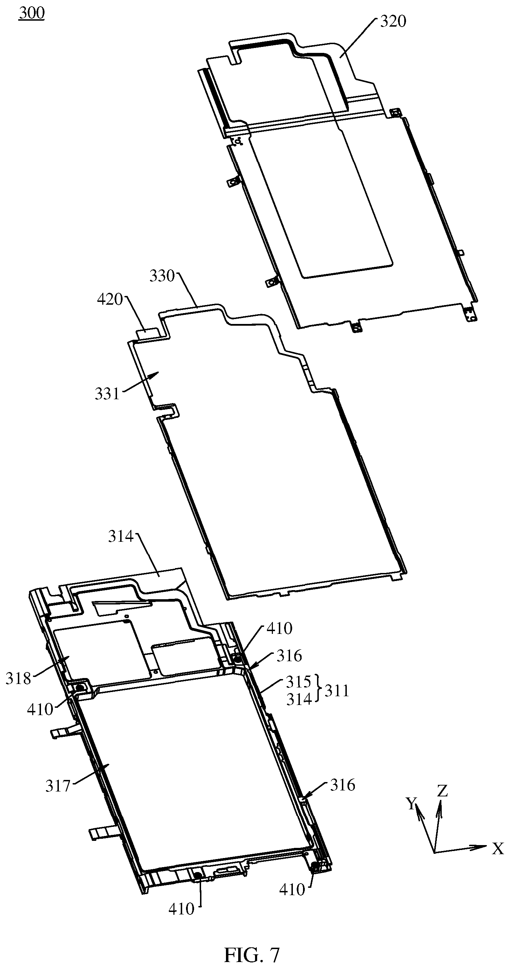

Refer to FIG. 6 and FIG. 7. FIG. 6 is a schematic diagram of a partial structure of a first main body 300 of the electronic device 1000 shown in FIG. 3 in the first embodiment, and FIG. 7 is a schematic exploded structural diagram of the first main body 300 shown in FIG. 6. FIG. 6 shows only a middle frame 311 and the vapor chamber 320 of the first main body 300, and FIG. 7 shows only the middle frame 311, the vapor chamber 320, and the first connecting layer 330 of the first main body 300.

The housing 310 may include the middle frame 311 and a rear cover 312. The middle frame 311 may bear the first display part 210, and both the rear cover 312 and a fourth connecting layer 313 may be disposed at the middle frame 311. The middle frame 311 may be provided with a clamping slot 316, a mounting hole 317, an avoidance hole 318, and a first fixing hole (not shown). An opening of the clamping slot 316 may be provided on an upper surface (not marked) of the middle frame 311. The clamping slot 316 may be recessed in a direction (a Z-axis positive direction in the figure) from the upper surface of the middle frame 311 to a lower surface (not marked) of the middle frame 311. There are a plurality of clamping slots 316. The plurality of clamping slots 316 may be provided at an edge of the middle frame 311, and may be spaced apart in a circumferential direction of the middle frame 311.

It should be noted that orientation terms such as "up", "down", "left", and "right" in this application are described with reference to orientations shown in FIG. 3. An orientation toward the Z-axis positive direction is "up", an orientation toward a Z-axis negative direction is "down", an orientation toward an X-axis negative direction is "left", and an orientation toward an X-axis positive direction is "right". This does not indicate or imply that the apparatus or element needs to have a specific orientation or be constructed and operated in a specific orientation, and therefore should not cannot be understood as a limitation on this application.

Both the mounting hole 317 and the avoidance hole 318 run through the middle frame 311 in a thickness direction (the Z-axis direction in the figure) of the middle frame 311. Specifically, both an opening of the mounting hole 317 and an opening of the avoidance hole 318 may be located on the lower surface of the middle frame 311. Both the mounting hole 317 and the avoidance hole 318 may be recessed in a direction (the Z-axis positive direction in the figure) from the lower surface of the middle frame 311 to the upper surface of the middle frame 311, and may can the upper surface of the middle frame 311. The mounting hole 317 may be located at the bottom of the middle frame 311, and the avoidance hole 318 may be located at the top of the middle frame 311 and spaced apart from the mounting hole 317. For example, the mounting hole 317 and the avoidance hole 318 may be roughly square holes.

An opening of the first fixing hole may be located on the upper surface of the middle frame 311. The first fixing hole is recessed from the upper surface of the middle frame 311 to the lower surface of the middle frame 311, and is spaced apart from the clamping slot 316. There are a plurality of first fixing holes. The plurality of first fixing holes may be provided at an edge of the middle frame 311, and may be spaced apart in the circumferential direction of the middle frame 311. For example, the first fixing holes may be circular holes.

In this embodiment, the middle frame 311 may include a middle plate 314 and a border frame 315. The middle plate 314 may be provided with the mounting hole 317 and the avoidance hole 318. The border frame 315 may be connected to the middle plate 314, and disposed around the middle plate 314. The border frame 315 may be provided with a clamping slot 316 and a first fixing hole. The middle plate 314 and the border frame 315 may be integrally formed. For example, the middle plate 314 may be made of an insulating material such as plastic, and the like, and the border frame 315 may be made of a metal material such as aluminum, and the like.

The rear cover 312 may be disposed on a lower side of the middle frame 311, and may cover the mounting hole 317 and the avoidance hole 318. Specifically, the rear cover 312 may be disposed on a lower side of the border frame 315. The rear cover 312 may be a battery cover of the first main body 300. For example, the rear cover 312 may be detachably disposed on the middle frame 311 to facilitate repair and replacement of a component or a module inside the first main body 300.

In this embodiment, the housing 310 may further include the fourth connecting layer 313. The fourth connecting layer 313 may be disposed between the middle frame 311 and the rear cover 312, and may be connected between the middle frame 311 and the rear cover 312, to implement assembly between the middle frame 311 and the rear cover 312. The fourth connecting layer 313 may be an adhesive layer, for example, a back adhesive or a foam adhesive. In some other embodiments, the rear cover 312 and the middle frame 311 may be integrally formed, or the rear cover 312 and the middle frame 311 may be formed into an integrated assembly through assembly, to ensure overall strength of the housing 310.

The first display part 210 may be disposed on an upper side of a border frame 3111 in the middle frame 311. In other words, the first display part 210 may be disposed on a side of the border frame 3111 facing away from the rear cover 312. In other words, the rear cover 312 and the first display part 210 may be respectively disposed on opposite sides of the border frame 3111. When a user uses the electronic device 1000, the first display part 210 is placed facing the user, and the rear cover 312 is placed facing away from the user. The first display part 210 may cover the clamping slot 316 and the first fixing hole.

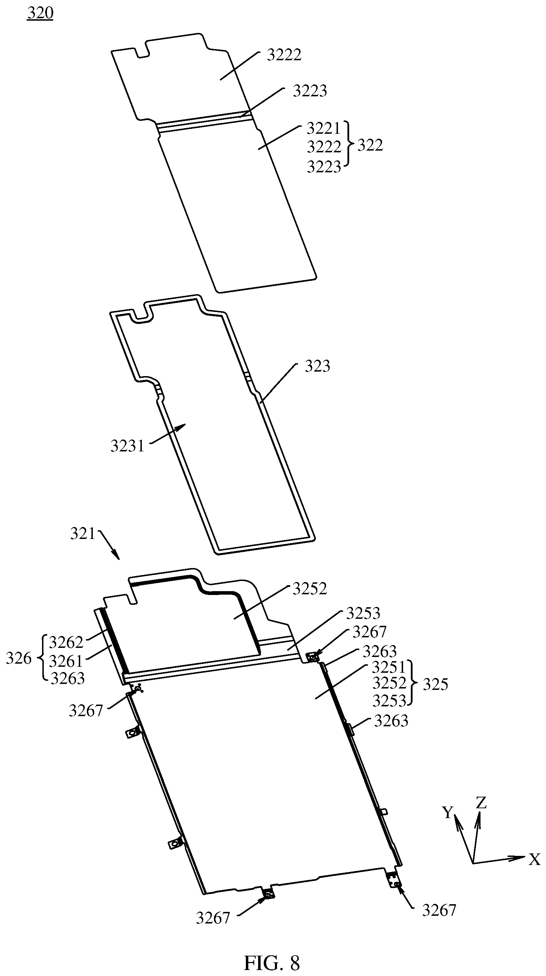

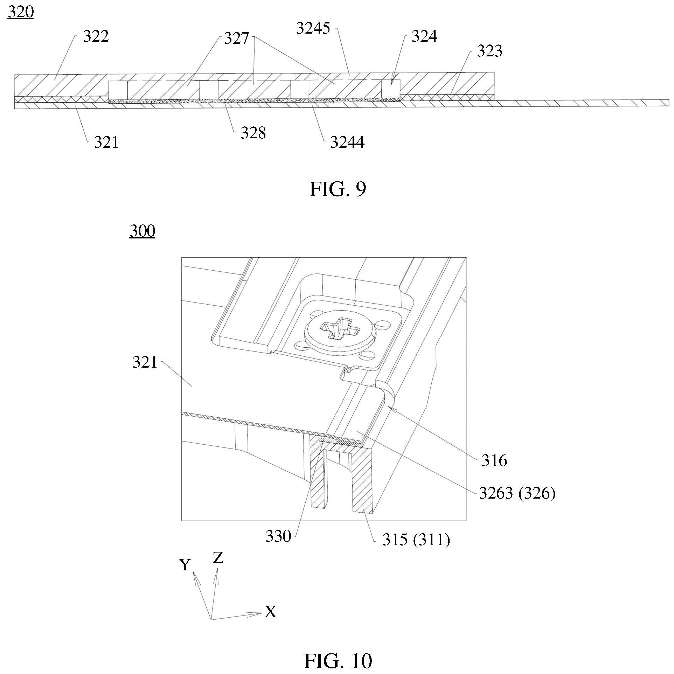

Refer to FIG. 8 and FIG. 9. FIG. 8 is a schematic exploded structural diagram of a vapor chamber 320 of the first main body 300 shown in FIG. 7, and FIG. 9 is a schematic cross-sectional structural view of the vapor chamber 320 of the first main body 300 shown in FIG. 7.

The vapor chamber 320 may be disposed at the middle frame 311, and may cover at least part of the mounting hole 317 and at least part of the avoidance hole 318. Specifically, the vapor chamber 320 may be disposed at the border frame 315 in the middle frame 311, and cover the mounting hole 317 and the avoidance hole 318. It should be noted that the vapor chamber 320 being disposed at the middle frame 311 means that the vapor chamber 320 may be disposed on a side of the middle frame 311, or the vapor chamber 320 may be at least partially embedded in the middle frame 311, and in this case, the vapor chamber 320 may be at least partially located in the mounting hole 317.

In this embodiment, the vapor chamber 320 includes a first cover plate 321, a second cover plate 322, and an intermediate connecting layer 323. The first cover plate 321 may be disposed at the border frame 315 in the middle frame 311, and cover the mounting hole 317 and the avoidance hole 318. The second cover plate 322 may be disposed on a side of the first cover plate 321 facing away from the middle frame 311, and may be spaced apart from the first cover plate 321. The intermediate connecting layer 323 may be disposed between the first cover plate 321 and the second cover plate 322, may be connected between the first cover plate 321 and the second cover plate 322, and may define a heat spreading cavity 324 with the first cover plate 321 and the second cover plate 322.

In this embodiment, the first cover plate 321 may be made of a metal material having a high yield modulus. It should be understood that, the metal material having a high yield modulus is a metal material having a yield modulus greater than or equal to 320 MPa, and the metal material having a high yield modulus includes but not limited to stainless steel or a titanium alloy. The first cover plate 321 may be formed by using an etching process, to ensure a thickness of a soldering edge at which the first cover plate 321 and the second cover plate 322 are soldered, thereby ensuring stiffness of the vapor chamber 320. For example, the thickness of the soldering edge of the first cover plate 321 may be 0.1 mm.

The first cover plate 321 may include a main body part 325 and a fixing part 326. The fixing part 326 may be connected to an outer side of the main body part 325, and may be disposed around the main body part 325. The main body part 325 and the fixing part 326 may be integrally formed. Specifically, the main body part 325 may cover the mounting hole 317 and the avoidance hole 318, and the fixing part 326 may be disposed at the border frame 315 in the middle frame 311.

The main body part 325 may include a first lower cover body 3251, a second lower cover body 3252, and a third lower cover body 3253. The first lower cover body 3251 may be located at the bottom of the main body part 325, may cover the mounting hole 317, and may be spaced apart from and opposite to the first portion 251 of the connection circuit board 250. The second lower cover body 3252 may be disposed on an upper side of the first lower cover body 3251, and may be spaced apart from the first lower cover body 3251. The second lower cover body 3252 may be located at the top of the main body part 325, and may cover the avoidance hole 318. The third lower cover body 3253 may be connected between the first lower cover body 3251 and the second lower cover body 3252. The third lower cover body 3253 and the second lower cover body 3252 may be spaced apart from and opposite to the second portion 252 of the connection circuit board 250. For example, the third lower cover body 3253 may be in a shape of a flat panel, and may be inclined relative to the first lower cover body 3251 and the second lower cover body 3252.

In this embodiment, the first cover plate 321 is designed to be of a stepped structure. The second lower cover body 3252 and the third lower cover body 3253 move upward relative to the first lower cover body 3251. This helps the vapor chamber 320 reuse a height space between the first lower cover body 3251 and the first display part 210. In this way, a sufficient height space below the second lower cover body 3252 and the third lower cover body 3253 may be reserved for assembly of an internal component of the electronic device 1000, thereby facilitating the light and thin design of the electronic device 1000.

Refer to FIG. 10. FIG. 10 is a schematic diagram of a partial structure of the first main body 300 shown in FIG. 6 cut along III-III.

The fixing part 326 may include a skirt 3261, a bent edge 3262, and a buckle 3263. The skirt 3261 may be disposed on an outer side of the main body part 325, may be spaced apart from the main body part 325, and may be disposed around the heat spreading cavity 324. Specifically, the skirt 3261 may be disposed at the border frame 315. The first connecting layer 330 may be disposed between the skirt 3261 and the border frame 315, and may be connected between the skirt 3261 and the border frame 315, to implement assembly between the first cover plate 321 and the border frame 315, and further implement assembly between the vapor chamber 320 and the middle frame 311. For example, the first connecting layer 330 may be an adhesive layer, for example, a back adhesive or a foam adhesive.

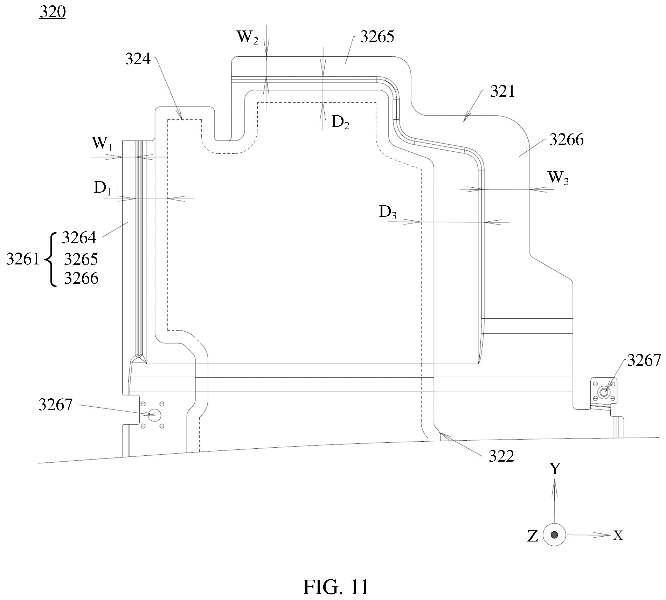

Refer to FIG. 11. FIG. 11 is a schematic diagram of a partial structure of the vapor chamber 320 shown in FIG. 8.

For example, a width of the skirt 3261 may be greater than or equal to 1.5 mm and less than or equal to 2.5 mm, to ensure that the skirt 3261 has a sufficient assembly width for assembly with the border frame 315, thereby ensuring assembly stability between the first cover plate 321 and the border frame 315, and meeting a bond width and a sealing demand between the vapor chamber 320 and the middle frame 311. The skirt 3261 may include a first sub-skirt 3264, a second sub-skirt 3265, and a third sub-skirt 3266. The first sub-skirt 3264, the second sub-skirt 3265, and the third sub-skirt 3266 may be spaced apart around the heat spreading cavity 324. Specifically, a distance between the first sub-skirt 3264 and the heat spreading cavity 324 is a first distance D₁, a distance between the second sub-skirt 3265 and the heat spreading cavity 324 is a second distance D₂, a distance between the third sub-skirt 3266 and the heat spreading cavity 324 is a third distance D₃. The first distance D₁ may be less than the second distance D₂ and the third distance D₃. In other words, the first sub-skirt 3264 may belong to a core heat dissipation region of the vapor chamber 320, and the second sub-skirt 3265 and the third sub-skirt 3266 may belong to a cold region of the vapor chamber 320. A width W₁ of the first sub-skirt 3264 may be less than a width W₁ of the second sub-skirt 3265 and a width W₃ of the third sub-skirt 3266, so that it can be ensured that the core heat dissipation region of the vapor chamber 320 has a large heat dissipation area, to improve a heat spreading capability of the vapor chamber 320, and the cold region of the vapor chamber 320 also has a sufficient assembly width for assembly with the border frame 315, to ensure assembly reliability between the vapor chamber 320 and the border frame 315. In some other embodiments, the skirt 3261 may not include the third sub-skirt 3266, or the skirt 3261 may further include a fourth sub-skirt. A quantity of sub-skirts included in the skirt 3261 is not specifically limited in this application.

In addition, the skirt 3261 may be provided with a second fixing hole 3267. The second fixing hole 3267 may run through the skirt 3261 in a thickness direction of the skirt 3261 (the Z-axis direction in the figure). Specifically, the second fixing hole 3267 may be located on an outer side of the first connecting layer 330, and spaced apart from the first connecting layer 330. There are a plurality of second fixing holes 3267, and the plurality of second fixing holes 3267 are spaced apart around the main body part 325. Each second fixing hole 3267 is in communication with one first fixing hole of the middle frame 311.

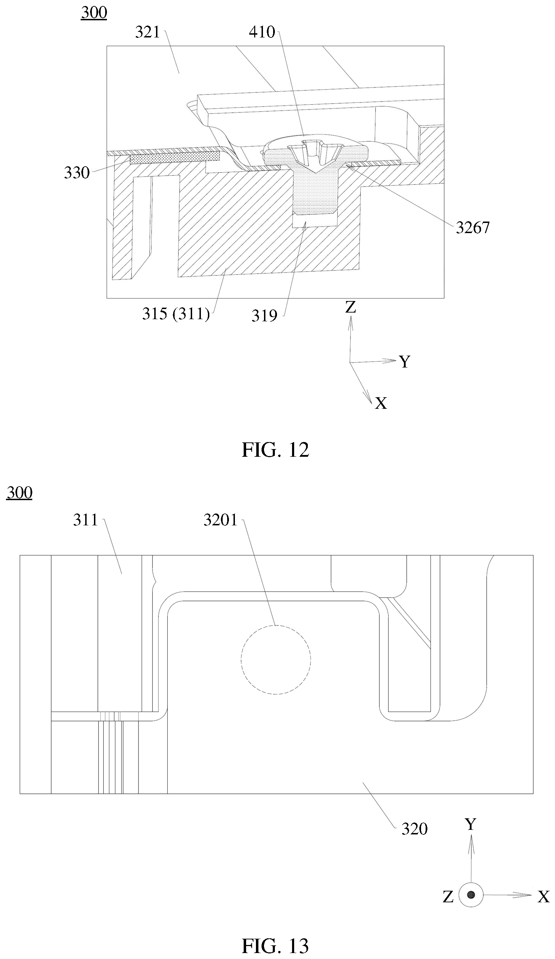

Refer to FIG. 10 and FIG. 12. FIG. 12 is a schematic diagram of a partial structure of the first main body 300 shown in FIG. 6 cut along IV-IV.

The first main body 300 may further include a plurality of fasteners 410. Each fastener 410 runs through one second fixing hole 3267 and one first fixing hole 319, and is connected to the skirt 3261 and the middle frame 311, to implement assembly between the first cover plate 321 and the middle frame 311, and further implement assembly between the vapor chamber 320 and the middle frame 311.

The bent edge 3262 may be connected between the main body part 325 and the skirt 3261, to adapt to an edge structure of the middle frame 311, thereby avoiding interference between the first cover plate 321 and the middle frame 311. The buckle 3263 may be connected to a side of the skirt 3261 facing away from the bent edge 3262. There may be a plurality of buckles 3263, and the plurality of buckles 3263 may be spaced apart from each other. Each buckle 3263 may be disposed in a clamping slot 316 of the middle frame 311, and clamp mutually with the clamping slot 316.

In this embodiment, the first cover plate 321 of the vapor chamber 320 is designed with the bent edge 3262 to implement assembly with the middle frame 311, and cooperation of the fastener 410 with the first fixing hole 319 and the second fixing hole 3267, cooperation of the clamping slot 316 with the buckle 3263, and cooperation of the first connecting layer 330 with the skirt 3261 and the middle frame 311 are used to implement connection between the first cover plate 321 and the middle frame 311. This can improve consistency of movement, electrical connection, and sealing of the middle frame 311 and the first cover plate 321, match a stiffness requirement of the electronic device 1000, and meet a grounding requirement of electrical connection and a waterproof requirement of the electronic device 1000. In some other embodiments, assembly between the first cover plate 321 and the middle frame 311 may alternatively be implemented through soldering. This is not specifically limited in this application.

Refer to FIG. 5A, FIG. 5B, and FIG. 8. The second cover plate 322 may be disposed on an upper side of the main body part 325, may be spaced apart from the main body part 325 in a thickness direction (the Z-axis direction in the figure) of the first main body 300, and may be spaced apart from the display driver 260 in a width direction (the X-axis direction in the figure) of the first main body 300. Specifically, a projection of the second cover plate 322 on the main body part 325 is located inside the main body part 325, and is spaced apart from a circumferential surface of the main body part 325. The second cover plate 322 may be located in the core heat dissipation region of the vapor chamber 320. Specifically, a distance between the projection of the second cover plate 322 on the main body part 325 and the first sub-skirt 3264 is a first distance, a distance between the projection of the second cover plate 322 on the main body part 325 and the second sub-skirt 3265 is a second distance, a distance between the projection of the second cover plate 322 on the main body part 325 and the third sub-skirt 3266 is a third distance, and the first distance may be less than the second distance and the third distance.

In this embodiment, the second cover plate 322 may be made of a metal material having a high yield modulus. It should be understood that, the metal material having a high yield modulus is a metal material having a yield modulus greater than or equal to 320 MPa, and the metal material having a high yield modulus includes but not limited to stainless steel or a titanium alloy. The second cover plate 322 may be formed by using an etching process, to ensure a thickness of a soldering edge at which the second cover plate 322 and the first cover plate 321 are soldered, thereby ensuring stiffness of the vapor chamber 320. For example, the thickness of the soldering edge of the second cover plate 322 may be 0.23 mm or 0.33 mm.

The second cover plate 322 includes a first upper cover body 3221, a second upper cover body 3222, and a third upper cover body 3223. The first upper cover body 3221 may be disposed between the first lower cover body 3251 and the first portion 251 of the connection circuit board 250, and may be spaced apart from and opposite to both the first lower cover body 3251 and the connection circuit board 250. The first upper cover body 3221 may be located at the bottom of the second cover plate 322. The second upper cover body 3222 may be disposed on an upper side of the first upper cover body 3221, may be spaced apart from the first upper cover body 3221, and may be spaced apart from and opposite to the second lower cover body 3252. The second upper cover body 3222 may be located at the top of the second cover plate 322. The third upper cover body 3223 may be connected between the first upper cover body 3221 and the second upper cover body 3222, and may be spaced apart from and opposite to the third lower cover body 3253. The third upper cover body 3223 and the second upper cover body 3222 may be spaced apart from and opposite to the second portion 252 of the connection circuit board 250. For example, the third upper cover body 3223 may be in a shape of a flat panel, and may be inclined relative to the first upper cover body 3221 and the second upper cover body 3222.

In this embodiment, the second cover plate 322 is designed to be of a stepped structure. The second upper cover body 3222 and the third upper cover body 3223 move upward relative to the first upper cover body 3221. This helps the vapor chamber 320 reuse a height space between the first upper cover body 3221 and the first display part 210. In this way, a sufficient height space below the second upper cover body 3222 and the third upper cover body 3223 may be reserved for assembly of an internal component of the electronic device 1000, thereby facilitating the light and thin design of the electronic device 1000.

In this embodiment, the intermediate connecting layer 323 may be a soldering layer made of a solder. Specifically, the intermediate connecting layer 323 is provided with a second clearance 3231. The second clearance 3231 is provided in the middle of the intermediate connecting layer 323, and runs through the intermediate connecting layer 323 in a thickness direction of the intermediate connecting layer 323. In other words, the intermediate connecting layer 323 is ring-shaped. The intermediate connecting layer 323 includes a first connecting layer portion (not shown), a second connecting layer portion (not shown), and a third connecting layer portion (not shown). The first connecting layer portion may be disposed between the first upper cover body 3221 and the first upper cover body 3221, is connected between the first upper cover body 3221 and the first upper cover body 3221, and may define a first heat spreading cavity 3241 with the first upper cover body 3221 and the first upper cover body 3221. The second connecting layer portion is located between the second upper cover body 3222 and the second upper cover body 3222, is connected between the second upper cover body 3222 and the second upper cover body 3222, and defines a second heat spreading cavity 3242 with the second upper cover body 3222 and the second upper cover body 3222. The third connecting layer portion is located between the third upper cover body 3223 and the third upper cover body 3223, is connected between the third upper cover body 3223 and the third upper cover body 3223, and defines a third heat spreading cavity 3243 with the third upper cover body 3223 and the third upper cover body 3223. The third heat spreading cavity 3243 is in communication with the first heat spreading cavity 3241 and the second heat spreading cavity 3242.

In this embodiment, the vapor chamber 320 includes a first heat spreading part 320a, a second heat spreading part 320b, and a third heat spreading part 320c. The first heat spreading part 320a may be disposed between the first portion 251 and the middle plate 314, and may cover at least part of the mounting hole 317. The first heat spreading part 320a may have a first heat spreading surface 321a and a third heat spreading surface 322a. The first heat spreading surface 321a may be a surface of the first heat spreading part 320a facing the battery 340. The third heat spreading surface 322a may be disposed opposite to the first heat spreading surface 321a in a thickness direction of the first heat spreading part 320a. In other words, the third heat spreading surface 322a may be a surface of the first heat spreading part 320a facing the first portion 251. The first heat spreading part 320a includes the first lower cover body 3251, the first upper cover body 3221, and the first connecting layer portion, and the first heat spreading cavity 3241 is provided in the first heat spreading part 320a.

In a length direction of the vapor chamber 320, the second heat spreading part 320b may be disposed on a side of the first heat spreading part 320a, may be spaced apart from the first heat spreading part 320a, and may cover at least part of the avoidance hole 318. Specifically, the second heat spreading part 320b may be disposed between the second portion 252 and the middle plate 314. The second heat spreading part 320b may have a second heat spreading surface 321b and a fourth heat spreading surface 322b. The second heat spreading surface 321b may be a surface of the second heat spreading part 320b facing the battery 340. The second heat spreading surface 321b may be located on a side of the first heat spreading surface 321a facing away from the battery 340. The fourth heat spreading surface 322b may be disposed opposite to the second heat spreading surface 321b in a thickness direction of the second heat spreading part 320b. In other words, the fourth heat spreading surface 322b may be a surface of the second heat spreading part 320b facing the second portion 252. The fourth heat spreading surface 322b may be located on a side of the third heat spreading surface 322a facing the display panel 240. In other words, the second heat spreading part 320b moves upward relative to the first heat spreading part 320a. The second heat spreading part 320b includes the second lower cover body 3252, the second upper cover body 3222, and the second connecting layer portion, and the second heat spreading cavity 3242 is provided in the second heat spreading part 320b.

In the length direction of the vapor chamber 320, the third heat spreading part 320c is connected between the first heat spreading part 320a and the second heat spreading part 320b, and may be disposed between the second portion 252 and the middle frame 311. The third heat spreading part 320c includes the third lower cover body 3253, the third upper cover body 3223, and the third connecting layer portion, and the third heat spreading cavity 3243 is provided in the third heat spreading part 320c. For example, the third heat spreading part 320c may be in a shape of a flat panel, and may be inclined relative to the first heat spreading part 320a and the second heat spreading part 320b.

In the electronic device 1000 provided in this application, the vapor chamber 320 is designed to be stepped, and the second heat spreading part 320b moves upward relative to the first heat spreading part 320a, so that a structure of the vapor chamber 320 matches a structure of the connection circuit board 250, and therefore a large thickness space on a side of the second heat spreading part 320b facing away from the second portion 252 may be reserved for arrangement of an internal component of the electronic device 1000, which facilitates the light and thin design of the electronic device.

Refer to FIG. 9. The heat spreading cavity 324 includes a heat spreading upper wall 3244 and a heat spreading lower wall 3245, and the heat spreading upper wall 3244 is spaced apart from and opposite to the heat spreading lower wall 3245 are in a thickness direction (the Z-axis direction in the figure) of the heat spreading cavity 324. For example, a thickness of the heat spreading upper wall 3244 may be 0.05 mm, and a thickness of the heat spreading lower wall 3245 may be 0.08 mm.

The vapor chamber 320 may include a support column 327 and a capillary structure 328. There may be a plurality of support columns 327. All of the plurality of support columns 327 may be disposed in the heat spreading cavity 324, may be supported between the heat spreading upper wall 3244 and the heat spreading lower wall 3245, and are spaced apart from each other, to ensure structural stability of the heat spreading cavity 324. The support column 327 and the second cover plate 322 may be integrally formed. For example, a height of the support column 327 may be 0.14 mm. The capillary structure 328 may be disposed in the heat spreading cavity 324, and may be disposed on the heat spreading lower wall 3245. For example, a thickness of the capillary structure 328 may be 0.06 mm.

Refer to FIG. 4, FIG. 5A, FIG. 5B. The battery 340 is at least partially disposed in the mounting hole 317, and may be disposed on the surface of the vapor chamber 320 facing the battery 340. It should be noted that the battery 340 is disposed on the surface of the vapor chamber 320 facing the battery 340 includes two cases: "direct disposition" and "indirect disposition". The "direct disposition" means that the battery 340 is directly disposed on the surface of the vapor chamber 320 facing the battery 340, and is in direct contact with the vapor chamber 320, that is, there is no other intermediate layer structure between the battery 340 and the vapor chamber 320. The "indirect disposition" means that the battery 340 may be disposed on the surface of the vapor chamber 320 facing the battery 340 through an intermediate layer structure such as an adhesive layer or a buffer layer, and is in spaced contact with the vapor chamber 320, that is, there is an intermediate layer structure such as an adhesive layer or a buffer layer between the battery 340 and the vapor chamber 320.

Specifically, the battery 340 may be completely accommodated in the mounting hole 317, and may be disposed on a surface of the first cover plate 321 facing away from the second cover plate 322. The battery 340 may be disposed on the first heat spreading surface 321a. In this embodiment, a projection of the battery 340 on the first cover plate 321 may be located in the main body part 325 of the first cover plate 321. The main body part 325 of the first cover plate 321 may carry the battery 340. The third connecting layer 350 may be disposed between the battery 340 and the first cover plate 321, and may be connected between the battery 340 and the first cover plate 321, to implement assembly between the battery 340 and the first cover plate 321. For example, the third connecting layer 350 may be an adhesive layer, for example, a back adhesive or a foam adhesive.

In the electronic device 1000 provided in this embodiment, the first cover plate 321 of the vapor chamber 320 is used as a middle plate of a battery compartment to bear the battery 340, which not only saves costs of the middle plate of the battery compartment, but also reduces space occupation of the middle plate of the battery compartment inside the electronic device 1000. The vapor chamber 320 may use a thickness space originally for the middle plate of the battery compartment, equivalent to reducing space occupation of the vapor chamber 320 inside the electronic device 1000 and improving space utilization inside the electronic device 1000, thereby facilitating the light and thin design of the electronic device 1000. In addition, because of reduction of the middle plate of the battery compartment, heat generated during operation of the battery 340 does not need to be transferred to the vapor chamber 320 through the middle plate of the battery compartment, and the heat generated during operation of the battery 340 may be directly transferred to the vapor chamber 320 through the third connecting layer 350, to achieve rapid heat dissipation for the battery 340. This helps prolong a service life of the battery 340, thereby improving use reliability of the electronic device 1000.

In addition, a fixing part 326 that directly extends to the border frame 315 is designed for the first cover plate 321 of the vapor chamber 320. The fixing part 326 can be directly assembled with the border frame 315, and a structure such as a step does not need to be designed on the middle plate 314 for assembly with the vapor chamber 320, so that space occupation of the middle plate 314 inside the electronic device 1000 can be saved, and the assembly position between the vapor chamber 320 and the middle plate 314 can be prevented from becoming a bottleneck of reducing the thickness of the electronic device 1000, thereby facilitating the light and thin design of the electronic device 1000.

The circuit board 360 may be disposed on a side of the middle frame 311 facing away from the vapor chamber 320, may at least partially cover the avoidance hole 318, and may be spaced apart from and opposite to both the second lower cover body 3252 of the first cover plate 321 and the rear cover 312. The heat generation component 370 may be disposed on a side of the circuit board 360 facing the first cover plate 321 of the vapor chamber 320, may run through the avoidance hole 318, and may be in contact with the second heat spreading surface 321b of the second heat spreading part 320b of the vapor chamber 320. The heat generation component 370 and the first heat spreading part 320a at least partially overlap in the thickness direction of the first main body 300. To be specific, a projection of the heat generation component 370 on the vapor chamber 320 at least partially overlaps with the first heat spreading part 320a in a direction from the second heat spreading part 320b to the first heat spreading part 320a. In other words, the first heat spreading part 320a may at least partially reuse a thickness space of the heat generation component 370, so that space occupation of the vapor chamber 320 inside the electronic device 1000 can be reduced, to match a demand for thinning the electronic device 1000, thereby facilitating the light and thin design of the electronic device 1000.

The power distribution network 380 may be disposed on a side of the circuit board 360 facing away from the vapor chamber 320, and may be spaced apart from the rear cover 312. The heat dissipation layer 390 may be disposed on a side of the vapor chamber 320 facing away from the battery 340, and may cover at least part of a surface of the first cover plate 321 facing the first display part 210 and at least part of a surface of the second cover plate 322 facing away from the first cover plate 321. The heat dissipation layer 390 may transfer heat of the vapor chamber 320 to an external environment, to implement heat dissipation of components such as the battery 340 and the heat generation component 370, thereby ensuring use reliability of the electronic device 1000. The heat dissipation layer 390 may be a graphite layer or a grapheme layer.

During operation of the heat generation component 370 provided in this embodiment, heat generated by the heat generation component 370 may be first transferred to the vapor chamber 320. After heat homogenization by the vapor chamber 320, some heat may be transferred to the display screen 200 through the heat dissipation layer 390 and a space between the heat dissipation layer 390 and the display screen 200, and then transferred to the external environment through the display screen 200; and remaining heat may be transferred to the middle plate 314 through the vapor chamber 320, then transferred to the border frame 315 and the display screen 200 through the middle plate 314, and finally transferred to the external environment through the border frame 315 and the display screen 200. In this way, heat dissipation of the heat generation component 370 is implemented.

In this embodiment, the first cover plate 321 and the second cover plate 322 of the vapor chamber 320 each are designed to be of a stepped structure, and the first portion 251 and the second portion 252 of the connection circuit board 250 each are designed to be of an unequal thickness structure, so that the circuit board 360, the heat generation component 370, and the power distribution network 380 can entirely move upward, and therefore a space between the first lower cover body 3251 and the second portion 252 of the connection circuit board 250 is at least partially reused. This facilitates the light and thin design of the electronic device 1000.

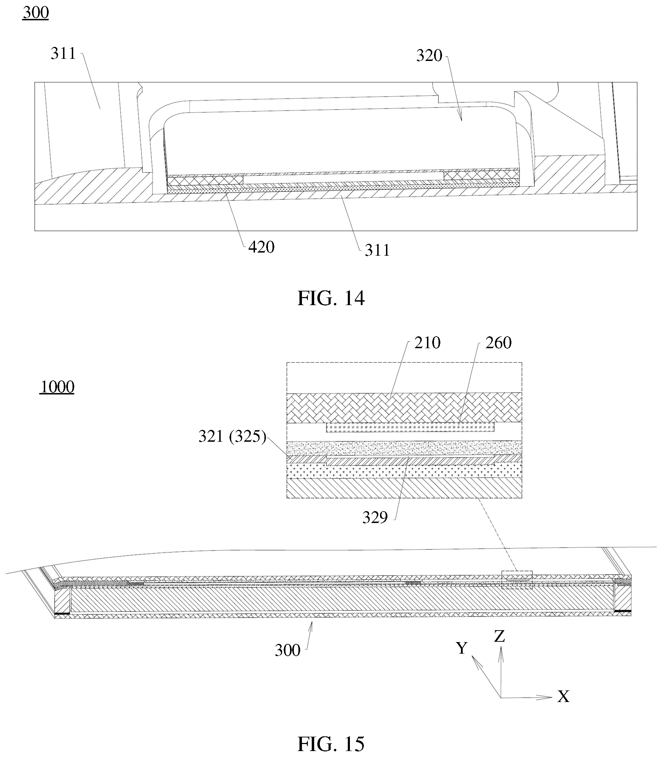

Refer to FIG. 7, FIG. 13, and FIG. 14. FIG. 13 is a schematic diagram of a partial structure of the first main body 300 shown in FIG. 6, and FIG. 14 is a schematic diagram of a partial structure of the first main body 300 shown in FIG. 6 cut along V-V.

In addition, the vapor chamber 320 is provided with a liquid injection port 3201. The liquid injection port 3201 may be provided at an edge of the vapor chamber 320, is staggered with both the battery 340 and the circuit board 360, and is in communication with the heat spreading cavity 324. The liquid injection port 3201 may be spaced apart from projections of the battery 340 and the circuit board 360 on the vapor chamber 320. In other words, the liquid injection port 3201 is staggered with the core heat dissipation region of the vapor chamber 320.

In this embodiment, the liquid injection port 3201 of the vapor chamber 320 is designed at a position staggered with the battery 340 and the circuit board 360, so that the liquid injection port 3201 can avoid a region in which the vapor chamber 320 is staggered with the battery 340 and the circuit board 360. This helps reduce space occupation of the vapor chamber 320 inside the electronic device 1000, thereby facilitating the light and thin design of the electronic device 1000.

In addition, the electronic device 1000 may further include a sealing adhesive layer 420. The sealing adhesive layer 420 may be disposed between the vapor chamber 320 and the middle frame 311, may be connected between the vapor chamber 320 and the middle frame 311, and may seal the liquid injection port 3201. This can not only prevent a cooling working medium in the heat spreading cavity 324 from flowing out from the liquid injection port 3201, to ensure a heat spreading capability of the vapor chamber 320, but also ensure that a waterproof property of the electronic device 1000 meets a requirement. For example, the sealing adhesive layer 420 and the first connecting layer 330 may be integrally formed.

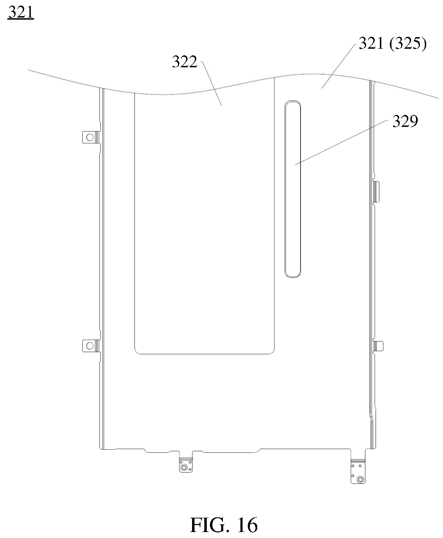

Refer to FIG. 15 and FIG. 16. FIG. 15 is a schematic diagram of a partial structure of the electronic device 1000 shown in FIG. 3 cut along I-I in a second embodiment, and FIG. 16 is a schematic diagram of a partial structure of a vapor chamber 320 of a first main body 300 of the electronic device 1000 shown in FIG. 3 in a second embodiment.

A difference between the vapor chamber 320 shown in this embodiment and the vapor chamber 320 shown in the foregoing first embodiment lies in that in this embodiment, the vapor chamber 320 is provided with a groove 329, and an opening of the groove 329 is located on a surface of the vapor chamber 320 facing the display driver 260. In this embodiment, the groove 329 is disposed in the first cover plate 321, and the opening of the groove 329 is located on an upper surface (not marked) of the first cover plate 321. The groove 329 is recessed in a direction (the Z-axis negative direction in the figure) from the upper surface of the first cover plate 321 to a lower surface (not shown) of the first cover plate 321. Specifically, the groove 329 may be provided in the main body part 325 of the first cover plate 321, may be spaced apart from the second cover plate 322, and may be provided corresponding to the display driver 260. In this case, a projection of the display driver 260 on the vapor chamber 320 is located in the groove 329. A thickness of the groove 329 may range from 0.04 mm to 0.1 mm, and an area of the groove 329 may range from 200 mm² to 400 mm². For example, the groove 329 may be formed by using a stamping process. When the groove 329 is formed, a convex hull may be formed on a side of the first cover plate 321 facing away from the second cover plate 322.

In this embodiment, the groove 329 is designed in the first cover plate 321, and the groove 329 is used to avoid the display driver 260, so as to improve a space reuse rate of components between the first display part 210 and the vapor chamber 320, thereby facilitating the light and thin design of the electronic device 1000.

In the electronic device 1000 provided in this application, the first cover plate 321 of the vapor chamber 320 is used as the middle plate of the battery compartment to bear the battery 340, and the middle plate of the battery compartment is omitted. This can not only save production costs of the middle plate of the battery compartment, but also reduce space occupation of the middle plate of the battery compartment inside the electronic device 1000, thereby facilitating the light and thin design of the electronic device 1000. In addition, the fixing part 326 of the first cover plate 321 of the vapor chamber 320 may be fixedly assembled with the border frame of the middle frame 311, to meet requirements of the electronic device 1000 on stiffness, waterproofing, and electrical connection. In addition, a left side of the vapor chamber 320 may be used as an effective heat dissipation region of the vapor chamber 320, and other electronic components of the electronic device 1000 may be arranged on a right side of the vapor chamber 320, thereby ensuring maximum space utilization inside the electronic device 1000, and facilitating the light and thin design of the electronic device 1000.

The foregoing is only specific implementations of the present invention and not intended to limit the protection scope of the present invention. Any variation or replacement readily figured out by a person skilled in the art within the technical scope disclosed by the present invention shall fall within the protection scope of the present invention. Therefore, the protection scope of the present invention shall be subject to the protection scope of the claims.

## Claims

1. An electronic device, comprising a middle frame, a vapor chamber, and a battery, wherein the middle frame is provided with a mounting hole, the mounting hole runs through the middle frame in a thickness direction of the middle frame, the vapor chamber is disposed at the middle frame and covers at least part of the mounting hole, and the battery is at least partially disposed in the mounting hole and is disposed on a surface of the vapor chamber facing the battery.

2. The electronic device according to claim 1, wherein the middle frame comprises a middle plate and a border frame, the middle plate is provided with the mounting hole, the border frame is connected to the middle plate and disposed around the middle plate, and the vapor chamber is disposed at the border frame.

3. The electronic device according to claim 2, wherein the middle plate is further provided with an avoidance hole, and the avoidance hole runs through the middle plate in a thickness direction of the middle plate and is spaced apart from the mounting hole;
the vapor chamber further covers at least part of the avoidance hole; and
the electronic device further comprises a circuit board and a heat generation component, the circuit board is disposed on a side of the middle plate facing away from the vapor chamber, and the heat generation component is disposed on a side of the circuit board facing the vapor chamber, runs through the avoidance hole, and is in contact with the vapor chamber.

4. The electronic device according to claim 3, wherein the vapor chamber comprises a first heat spreading part, a second heat spreading part, and a third heat spreading part, the first heat spreading part covers at least part of the mounting hole, the first heat spreading part has a first heat spreading surface facing the battery, the second heat spreading part is disposed on a side of the first heat spreading part in a length direction of the vapor chamber and covers at least part of the avoidance hole, the second heat spreading part has a second heat spreading surface facing the battery, the second heat spreading surface is located on a side of the first heat spreading surface facing away from the battery, and the third heat spreading part is connected between the first heat spreading part and the second heat spreading part; and
the battery is disposed on the first heat spreading surface, and the heat generation component is in contact with the second heat spreading surface.

5. The electronic device according to claim 4, wherein the electronic device further comprises a display panel and a connection circuit board, the display panel is disposed on a side of the vapor chamber facing away from the middle plate, the connection circuit board is electrically connected to the display panel and the circuit board, the connection circuit board comprises a first portion and a second portion, the first portion is disposed between the display panel and the first heat spreading part, the first portion has a first surface facing away from the display panel, the second portion is connected to a side of the first portion and is disposed between the display panel and the second heat spreading part, the second portion has a second surface facing away from the display panel, and the second surface is located on a side of the first surface facing the display panel; and
the first heat spreading part has a third heat spreading surface disposed opposite to the first heat spreading surface, the second heat spreading part has a fourth heat spreading surface disposed opposite to the first heat spreading surface, and the fourth heat spreading surface is located on a side of the third heat spreading surface facing the second portion.

6. The electronic device according to claim 5, wherein the electronic device further comprises a display driver, the display driver is disposed on the display panel or the connection circuit board and electrically connected to the connection circuit board, and the display driver and the vapor chamber at least partially overlap in a thickness direction of the electronic device.

7. The electronic device according to claim 6, wherein the vapor chamber is provided with a groove, an opening of the groove is located on a surface of the vapor chamber facing the display driver, and a projection of the display driver on the vapor chamber is located in the groove.

8. The electronic device according to any one of claims 3 to 7, wherein the vapor chamber is provided with a liquid injection port, and the liquid injection port is staggered with both the battery and the circuit board in the thickness direction of the electronic device.

9. The electronic device according to claim 8, wherein the electronic device further comprises a sealing adhesive layer, and the sealing adhesive layer is connected between the vapor chamber and the middle frame and seals the liquid injection port.

10. The electronic device according to any one of claims 1 to 9, wherein the vapor chamber comprises a first cover plate, a second cover plate, and an intermediate connecting layer, the first cover plate is disposed at the border frame and at least partially covers the mounting hole, the second cover plate is disposed on a side of the first cover plate facing away from the border frame, and the intermediate connecting layer is connected between the first cover plate and the second cover plate and defines a heat spreading cavity with the first cover plate and the second cover plate; and
the battery is disposed on a surface of the first cover plate facing away from the second cover plate.

11. The electronic device according to claim 10, wherein the first cover plate comprises a skirt, and the skirt is disposed around a heat spreading cavity and is disposed at the border frame; and
the electronic device further comprises a first connecting layer, and the first connecting layer is connected between the skirt and the border frame.

12. The electronic device according to claim 11, wherein the skirt comprises a first sub-skirt and a second sub-skirt, a distance between the first sub-skirt and the heat spreading cavity is less than a distance between the second sub-skirt and the heat spreading cavity, and a width of the first sub-skirt is less than a width of the second sub-skirt.

13. The electronic device according to any one of claims 10 to 12, wherein the border frame is provided with a clamping slot; and
the first cover plate comprises a buckle, and the buckle is disposed in the clamping slot and clamps mutually with the clamping slot.

14. The electronic device according to any one of claims 10 to 13, wherein the border frame is provided with a first fixing hole;
the first cover plate is provided with a second fixing hole, and the second fixing hole runs through the first cover plate in a thickness direction of the first cover plate and is in communication with the first fixing hole; and
the electronic device further comprises a fastener, and the fastener runs through the first fixing hole and the second fixing hole, and is connected to the first cover plate and the border frame.

15. The electronic device according to any one of claims 1 to 14, wherein the electronic device further comprises a heat dissipation layer, and the heat dissipation layer is disposed on a side of the vapor chamber facing away from the battery.

16. The electronic device according to any one of claims 1 to 15, wherein the electronic device comprises a first main body, a second main body, and a foldable mechanism, the first main body comprises the middle frame, the vapor chamber, and the battery, and the foldable mechanism is connected between the first main body and the second main body.
